# EUROPÄISCHE PATENTSCHRIFT

(11) **EP 3 102 387 B1**
(45) Veröffentlichungstag und Bekanntmachung des Hinweises auf die Patenterteilung: **15.01.2020**
(21) Anmeldenummer: 15701988.6
(22) Anmeldetag: 03.02.2015
(51) Int. Cl.: B29C 65/08

(54) **ULTRASCHALLSCHWEISSVORRICHTUNG MIT VORWÄRMEINRICHTUNG**
ULTRASONIC WELDING DEVICE WITH PREHEATING UNIT
DISPOSITIF DE SOUDAGE PAR ULTRASONS ÉQUIPÉ D'UN MOYEN DE PRÉCHAUFFAGE

(30) Priorität: 06.02.2014 DE 102014101503
(43) Veröffentlichungstag der Anmeldung: 14.12.2016
(73) Patentinhaber: Herrmann Ultraschalltechnik GmbH & Co. KG, 76307 Karlsbad (DE)
(72) Erfinder: FISCHER, Thomas, 75334 Straubenhardt (DE); SCHNEIDER, Arnold, 76275 Ettlingen-Schluttenbach (DE)
(74) Vertreter: WSL Patentanwälte Partnerschaft mbB
(86) Internationale Anmeldenummer: PCT/EP2015/052104
(87) Internationale Veröffentlichungsnummer: WO 2015/117928

(56) Entgegenhaltungen:
- WO-A1-2012/060876
- DE-U1-202011 108 504

## Beschreibung

Die vorliegende Erfindung betrifft eine Vorrichtung zum Ultraschallverschweißen von mindestens zwei Materialbahnen.

Mit solchen Vorrichtungen können beispielsweise Kunststoffmaterialbahnen ultraschallverschweißt werden. Üblicherweise weisen solche Vorrichtungen eine Sonotrode, die mit einer Ultraschallschwingung anregbar ist, ein Gegenwerkzeug und eine Materialbahnführung auf, die derart ausgelegt ist, dass die zu verschweißenden Materialbahnen zwischen der Sonotrode und dem Gegenwerkzeug hindurchgeführt werden kann.

Zum Anregen der Sonotrode mit einer Ultraschallschwingung wird ein Ultraschallerzeuger bestehend aus einem Generator, der eine elektrische Wechselspannung erzeugt, und einem Konverter, der in der Regel mit Hilfe von Piezoelementen die elektrische Wechselspannung in eine mechanische Schwingung umwandelt, verwendet. Der Konverter kann entweder unmittelbar mit der Sonotrode verbunden sein oder es kann ein sogenannter Amplitudentransformator zwischengeschaltet sein, der lediglich die mechanische Schwingungsamplitude, jedoch nicht die mechanische Schwingungsfrequenz, beeinflusst.

Ultraschall ist eine mechanische Schwingung oberhalb der Hörgrenze. Der Frequenzbereich beginnt bei etwa 20 kHz und erstreckt sich bis zu Frequenzen von 1 GHz. Solche Ultraschallfrequenzen werden in der Regel mit Hilfe von piezoelektrischen Schallwandlern aus elektrischer Energie erzeugt.

Um die Ultraschallschwingung mit Hilfe der Ultraschallschwingeinheit effektiv zu übertragen, ist es notwendig, die Ultraschallschwingeinheit in eine Resonanz zu bringen. Abhängig von dem Aufbau der Ultraschallschwingeinheit weist diese eine Vielzahl von Eigenfrequenzen auf. Nur wenn der Konverter eine Eigenfrequenz der Ultraschallschwingeinheit erzeugt, kommt es zu einer resonanten Schwingung der Ultraschallschwingeinheit. Daher müssen Konverter und Ultraschallschwingeinheit aufeinander abgestimmt werden.

Im Allgemeinen ist das Gegenwerkzeug relativ zur Sonotrode bewegbar, sodass die Materialbahnen, wie zum Beispiel Folienbahnen, leicht zwischen die Sonotrode und das Gegenwerkzeug gebracht werden können, die dann zum Verschweißen die Ultraschallschwingungen überlagert von einer Schweißkraft auf die Materialbahnen aufbringen. Hierbei sind grundsätzlich zwei Bearbeitungsverfahren zu unterscheiden, nämlich das Ultraschallschweißen, bei dem zwei oder mehr Materialbahnen miteinander verschweißt werden, und das Ultraschallschneiden, bei dem die Materialbahnen mittels Ultraschall durchtrennt werden. Nicht selten erfolgt Ultraschallschweißen und Ultraschallschneiden gleichzeitig, indem beispielsweise in einem Verpackungsstoff zwei parallele Schweißnähte eingebracht werden und zugleich die Materialbahn zwischen den beiden parallelen Schweißnähten durchtrennt wird.

Beispielsweise werden die genannten Vorrichtungen bei Schlauchbeutelverpackungsmaschinen zur Verschweißung der Längsnähte eingesetzt. Hier wird aus eine Materialbahn ein Schlauch für die Aufnahme eines Verpackungsgutes gebildet, in dem die beiden Lägnskanten der Materialbahn überlappend miteinander verbunden werden. Dabei werden die zu verbindenden Materialbahnkanten zwischen Sonotrode und Gegenwerkzeug kontinuierlich hindurchbewegt. In der Regel weisen dazu sowohl Sonotrode als auch Gegenwerkzeug eine zylindermantelförmige Schweißfläche auf.

Wenn daher im Folgenden vom Verschweißen von Materialbahnen die Rede ist, ist damit immer auch das Verschweißen von beispielsweise Kanten derselben Materialbahn gemeint. Wesentlich ist lediglich, dass das zu verschweißende Material aus mindestens 2 Lagen besteht, die mit Hilfe des Schweißvorgangs miteinander verbunden werden sollen.

Als Schweißfläche wird diejenige Fläche bezeichnet, die beim Schweißvorgang mit den zu bearbeitenden Materialbahnen in Kontakt tritt.

Zur Erstellung der Querschweißnaht werden gegenwärtig meist Heißsiegelvorrichtungen eingesetzt. Vereinzelt werden jedoch auch bereits zur Erstellung von Querschweißnähten Ultraschallverarbeitungsvorrichtungen verwendet. Dies sind jedoch diskontinuierlich arbeitende Sonotroden, d.h., die Sonotrode dreht sich nicht, sondern die im Wesentlichen rechteckige Schweißfläche wird periodisch zur Erzeugung der Querschweißnaht mit der Materialbahn in Kontakt gebracht. Dabei kann entweder der Fortlauf der Materialbahn während der Verschweißung gestoppt werden oder die Sonotrode und das Gegenwerkzeug können während des Verschweißungsvorgangs parallel zur sich bewegenden Materialbahn mit dieser mitbewegt werden.

Die Verwendung von Ultraschallsonotroden zum Verschweißen von Materialbahnen hat die Verarbeitungsgeschwindigkeit beim Verschweißen deutlich gegenüber dem vorher üblichen Heißsiegelverfahren erhöht, da mit Hilfe von Ultraschallsonotroden die für die Verschweißung notwendige Erwärmung nahezu punkt- oder linienförmig lokal in die Grenzflächen der zu verschweißenden Materialbahnen eingebracht werden kann. Dies ermöglicht auch die Verwirklichung der eingangs beschriebenen kontinuierlichen Verfahren.

Dennoch muss auch hier genügend Energie in die Grenzfläche der beiden Materialbahnen eingebracht werden, um eine zuverlässige Ultraschallbearbeitung zu gewährleisten.

Um die Verarbeitungsgeschwindigkeit bei der Ultraschallbearbeitung noch weiter zu erhöhen, ist bereits versucht worden, die Materialbahnen vor der Ultraschallbearbeitung mit Hilfe einer Vorwärmeinrichtung zu erwärmen. Zu diesem Zweck wurde ein erwärmter Luftstrom auf die zu verschweißenden Flächen gelenkt.

Durch dieses Verfahren kann zwar die Bearbeitungsgeschwindigkeit erhöht werden, da durch die Vorerwärmung der Materialbahnen weniger Energie über die Ultraschallsonotrode in den Grenzflächenbereich zwischen den beiden zu verschweißenden Materialbahnen eingebracht werden muss. Allerdings sind mit der Heißlufterzeugung hohe Energiekosten verbunden. Zudem ist die Verwendung von Heißluft im Lebensmittelbereich problematisch, da möglicherweise in der Umgebung enthaltene Staubpartikel, Mikroben oder ähnliches nun direkt auf das zu bearbeitende Material geblasen werden. Aus der WO2012/060876 A1 ist eine Ultraschallschweißvorrichtung bekannt, die eine Vorwärmsonotrode aufweist.

Ausgehend von dem beschriebenen Stand der Technik ist es daher Aufgabe der vorliegenden Erfindung, eine Ultraschallschweißvorrichtung zur Verfügung zu stellen, die die genannten Nachteile vermeidet, und dennoch eine hohe Verarbeitungsgeschwindigkeit zur Verfügung stellt.

Diese Aufgabe wird dadurch gelöst, dass die Einrichtung zum Vorwärmen zumindest einer Materialbahn eine mit einer Ultraschallschwingung anregbare Vorwärmsonotrode mit den Merkmalen des Patentanspruchs 1 aufweist.

Erfindungsgemäß wird somit zumindest eine der beiden Materialbahnen ebenfalls mit einer Ultraschallbearbeitung mit den Merkmalen des Patentanspruchs 1 vorgewärmt. Bei der Vorwärmung werden Temperaturen im Bereich der zu verschweißenden Materialbahnen erzielt, die unterhalb der Schmelztemperatur des zu verschweißenden Materials liegen. Wird beispielsweise Polyethylen verschweißt, so könnte die Vorerwärmung auf ca. 80° C erfolgen. Erfindungsgemäß wird jedoch nicht die gesamte Materialbahn erwärmt, sondern lediglich ein Bereich, der im Wesentlichen den im Folgeschritt zu verschweißenden Bereich umfasst.

In einer bevorzugten Ausführungsform ist ein Vorwärmgegenwerkzeug vorgesehen, welches der Vorwärmsonotrode zugeordnet ist, wobei die Materialbahnführung derart ausgelegt ist, dass zumindest eine Materialbahn und vorzugsweise beide Materialbahnen zwischen der Vorwärmsonotrode und dem Vorwärmgegenwerkzeug hindurchgeführt werden kann.

Mit anderen Worten werden somit die zu verschweißenden Materialbahnen zunächst zwischen der Vorwärmsonotrode und dem Vorwärmgegenwerkzeug hindurchgeführt, welche eine Ultraschallschwingung auf das Material aufbringen, um dieses zu erwärmen. Direkt im Anschluss daran werden die Materialbahnen zwischen der Bearbeitungssonotrode und dem Bearbeitungsgegenwerkzeug hindurchgeführt, die eine Verschweißung der Materialbahnen in dem vorgewärmten Bereich durchführen.

In der erfindungsgemäßen Ausführungsform hat die Bearbeitungssonotrode eine Schweißfläche mit einer Schweißflächenbreite a und die Vorwärmsonotrode eine Schweißfläche mit einer Schweißflächenbreite b, wobei b größer als a ist, wobei b vorzugsweise um mehr als 50 % größer und am besten b in etwa doppelt so groß wie a ist.

Durch die Schweißflächenbreite wird im Wesentlichen die Breite des Bereiches festgelegt, der vorerwärmt bzw. verschweißt werden soll. Trotz unmittelbar an die Vorwärmung anschließender Verschweißung wird dennoch die im Bereich der Schweißfläche eingebrachte Wärmeenergie durch Wärmeleitung innerhalb des Materials in die umgebenden Bereiche abgegeben. Daher hat es sich als zweckmäßig erwiesen, die Schweißflächenbreite der Vorwärmsonotrode, d.h. derjenigen Sonotrode, die für die Vorwärmung des Materials zuständig ist, breiter auszuführen als die Schweißfläche der für den Schweißvorgang vorgesehenen Sonotrode. Auch hier kommt es direkt nach dem Vorwärmungsprozess zwar zu einer Wärmeleitung innerhalb des Materials, wodurch das Material insbesondere in den Randbereichen des erwärmten Abschnittes bereits durch Wärmeleitung abkühlt, da jedoch der vorerwärmte Bereich breiter als der zu verschweißende Bereich ausgewählt worden ist, ist im Wesentlichen beim Verschweißvorgang der zu verschweißende Bereich gegenüber der Umgebungstemperatur erwärmt, sodass die Verschweißung mittels Ultraschall mit Hilfe der Bearbeitungssonotrode deutlich schneller erfolgen kann und daher die Bearbeitungsgeschwindigkeit bzw. die Materialbahnvorschubgeschwindigkeit erhöht werden kann.

Grundsätzlich ist die erfindungsgemäße Maßnahme sowohl bei kontinuierlichen Verfahren als auch bei intermittierend arbeitenden Verfahren von Vorteil. Es hat sich jedoch gezeigt, dass die beschriebenen Vorteile beim kontinuierlichen Verfahren besonders ausgeprägt sind. Daher ist in einer bevorzugten Ausführungsform vorgesehen, dass zumindest die Bearbeitungssonotrode und vorzugsweise auch die Vorwärmsonotrode als Rotativsonotrode mit einer im Wesentlichen zylindermantelförmigen Schweißfläche ausgebildet ist.

Weiterhin ist es in der Regel von Vorteil, dass zumindest das Bearbeitungsgegenwerkzeug und vorzugsweise auch das Vorwärmgegenwerkzeug rotierbar ist und eine im Wesentlichen zylindermantelförmige Schweißfläche aufweist.

Um die Schweißbearbeitungsgeschwindigkeit noch weiter zu erhöhen, kann auch das Bearbeitungsgegenwerkzeug selbst als Sonotrode ausgebildet sein, die ebenfalls mit einer Ultraschallschwingung angeregt werden kann. Dabei ist es von Vorteil, wenn die beiden Sonotroden unterschiedliche Eigenfrequenzen aufweisen und mit unterschiedlichen Ultraschallfrequenzen angeregt werden, um eine gegenseitige Schwingungsbeeinflussung zu vermeiden. Im Grunde genommen wird daher die Materialbahn durch zwei gegenüberliegende Sonotroden verschweisst.

Eine solche Ausbildung des Gegenwerkzeuges ist grundsätzlich auch für das Vorwärmgegenwerkzug denkbar, um die Vorwärmung zu beschleunigen bzw. die Wärmeenergie gleichmäßiger zu verteilen.

In einer alternativen bevorzugten Ausführungsform ist vorgesehen, dass das Bearbeitungsgegenwerkzeug auch der Vorwärmsonotrode zugeordnet ist und die Materialbahnführung derart ausgelegt ist, dass die Materialbahn zunächst zur Vorwärmung zwischen Vorwärmsonotrode und Bearbeitungsgegenwerkzeug und dann zur Verschweißung zwischen Bearbeitungssonotrode und Bearbeitungsgegenwerkzeug hindurchgeführt werden kann.

Mit anderen Worten sind dem vorzugsweise zylindermantelförmig ausgebildeten Bearbeitungsgegenwerkzeug zwei Sonotroden zugeordnet, die in Umfangsrichtung beabstandet mit dem Gegenwerkzeug interagieren. Die zu verschweißende Materialbahn wird somit zunächst zwischen dem Gegenwerkzeug und der Vorwärmsonotrode durchgeführt, um streifenförmig im Grenzflächenbereich das Material vorzuwärmen, und dann zwischen Bearbeitungssonotrode und dem Bearbeitungsgegenwerkzeug hindurchgeführt, um innerhalb des vorgewärmten Bereiches eine Ultraschallverschweißung durchzuführen. Diese Ausführungsform ist jedoch nur mit Materialbahnen, die eine ausreichende Flexibilität aufweisen, verwendbar.

Grundsätzlich sollte aber der Abstand zwischen Vorwärmeinheit, bestehend aus Vorwärmsonotrode und Vorwärmgegenwerkzeug, und Bearbeitungseinheit, bestehend aus Bearbeitungssonotrode und Bearbeitungsgegenwerkzeug, möglichst klein, vorzugsweise kleiner als 1 m sein, um zu vermeiden, dass die durch die Vorwärmeinheit in das Material eingebrachte Wärme bis zur Bearbeitung den Schweißbereich schon wieder verlassen hat. Gegebenenfalls kann es von Vorteil sein, wenn eine Einrichtung zum Aneinanderpressen der vorgewärmten, aber noch nicht bearbeiteten Materialbahnen zwischen der Vorwärmeinheit und der Bearbeitungseinheit vorgesehen ist. Solch eine Einrichtung kann beispielsweise aus einer oder mehreren Anpressrollen oder Anpressbändern bestehen.

Des Weiteren kann es für manche Materialien von Vorteil sein, wenn eine Einrichtung zum Rotieren der Vorwärmsonotrode und zum Rotieren der Bearbeitungssonotrode vorgesehen ist, wobei die Einrichtung derart ausgelegt ist, dass die Umfangsgeschwindigkeit der Bearbeitungssonotrode größer als die Umfangsgeschwindigkeit der Vorwärmsonotrode ist. Dies ist insbesondere bei Der Verschweißung von Materialien von Vorteil, die bereits während des Vorwärmes aufgrund des Druckes den Vorwärmsonotrode und Vorwärmgegenwerkzeug auf das Material aufbringen, gestreckt, d.h. länger werden.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figur.

Es zeigt:

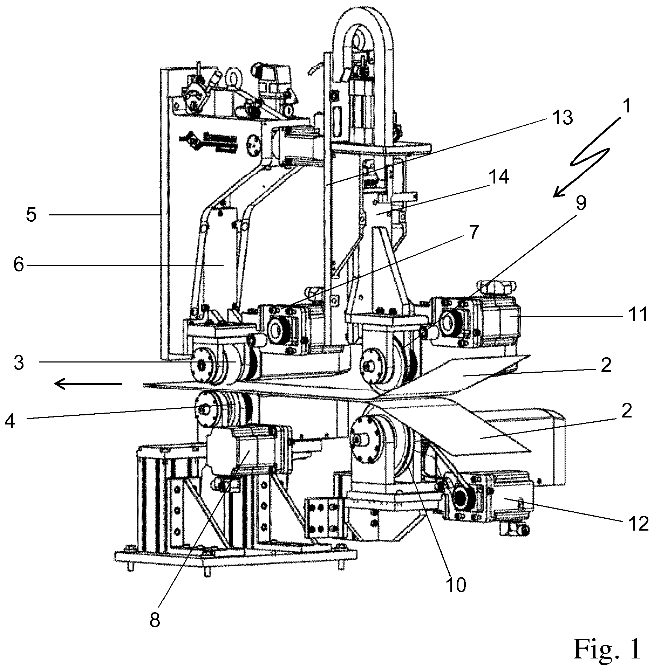

Figur 1 eine perspektivische Ansicht einer bevorzugten Ausführungsform der Erfindung.

In Figur 1 ist eine Ausführungsform einer erfindungsgemäßen Ultraschallschweißvorrichtung 1 gezeigt. Diese dient dazu, zwei Materialbahnen 2 miteinander zu verschweißen.

Die Verschweißung erfolgt mittels einer Bearbeitungssonotrode 3 und einem Bearbeitungsgegenwerkzeug4. Sowohl die Bearbeitungssonotrode 3 als auch das Bearbeitungsgegenwerkzeug 4 weisen zylindermantelförmige Schweißflächen auf und werden mit Hilfe der Antriebe 7, 8 um ihre Längsachse gedreht. In der gezeigten Ausführungsform ist die Drehachse des Bearbeitungsgegenwerkzeuges 4 mit dem Maschinenständer verbunden, während die Bearbeitungssonotrode 3 mit Hilfe des Schlittens 6 in vertikaler Richtung relativ zur Halterung 5 bewegt werden kann. Mit Hilfe des Schlittens 6 kann somit der gewünschte Schweißspalt zwischen der Bearbeitungssonotrode 3 und dem Bearbeitungsgegenwerkzeug 4 eingestellt werden. Die Bearbeitungssonotrode 3 wird mit Hilfe eines Konverters (nicht gezeigt) in eine Ultraschallschwingung versetzt, sodass die Materialbahnen 2, die in Pfeilrichtung durch die Vorrichtung bewegt werden, zwischen der Bearbeitungssonotrode 3 und dem Gegenwerkzeug 4 verschweißt werden. Dabei ist die Umfangsgeschwindigkeit von Bearbeitungssonotrode 3 und Gegenwerkzeug 4 gleich der Bewegungsgeschwindigkeit der Materialbahnen 2.

Es versteht sich, dass die Bewegungsgeschwindigkeit der Materialbahnen nicht beliebig erhöht werden kann, da während der Bearbeitung der Materialbahn durch die Bearbeitungssonotrode 3 genügend Energie in die Materialbahnen 2 eingebracht werden muss, um eine Verschweißung der beiden Materialbahnen zu gewährleisten.

Um die Vorschubgeschwindigkeit der Materialbahnen zu erhöhen, weist die Ausführungsform erfindungsgemäß eine Vorwärmsonotrode 9 sowie ein Vorwärmgegenwerkzeug 10 auf. Auch die Vorwärmsonotrode 9 und das Vorwärmgegenwerkzeug 10 haben zylindermantelförmige Schweißflächen und sind mit Hilfe der Antriebe 11, 12 um ihre Drehachse rotierbar. Beim Transport der Materialbahnen 2 in Pfeilrichtung durch die Ultraschallschweißvorrichtung werden die Materialbahnen daher zunächst von der Vorwärmsonotrode 9 und dem Vorwärmgegenwerkzeug 10 und danach von der Bearbeitungssonotrode 3 und dem Bearbeitungsgegenwerkzeug4 bearbeitet. Auch die Vorwärmsonotrode 9 kann mit Hilfe des Schlittens 14 in vertikaler Richtung relativ zu der Halterung 13 bewegt werden, während das Vorwärmgegenwerkzeug 10 in vertikaler Richtung nicht bewegt werden kann.

Die Vorwärmsonotrode 9 sowie das Vorwärmgegenwerkzeug 10 sind dafür vorgesehen, die Materialbahnen 2 in dem Bereich, der von der Bearbeitungssonotrode 3 und dem Bearbeitungsgegenwerkzeug 4 ultraschallverschweißt werden soll, vorzuwärmen. Die Vorwärmsonotrode 9, die ebenfalls mit einer Ultraschallschwingung beaufschlagt wird, gibt bei der Materialbearbeitung daher Schwingungsenergie an die Materialbahnen 2 ab, sodass im Ergebnis die beiden Materialbahnen 2 in einem streifenförmigen Bereich, dessen Breite durch die Schweißflächenbreite der Vorwärmsonotrode 9 bzw. dem Vorwärmgegenwerkzeug 10 bestimmt wird und der sich in Materialvorschubrichtung ausbreitet, vorgewärmt.

Dabei werden beispielsweise bei der Bearbeitung von Polyethylen (PE) Temperaturen von ca. 80° C erreicht. Wesentlich ist dabei, dass die Schmelztemperatur des Materials nicht überschritten wird, da ansonsten bereits eine Verschweißung erfolgen würde.

Die Vorwärmsonotrode 9 und das Vorwärmgegenwerkzeug 10 sind lediglich für eine Vorwärmung der Materialbahnen 2 vorgesehen. Die eigentliche Verschweißung erfolgt dann mit Hilfe der Bearbeitungssonotrode 3 und dem Gegenwerkzeug 4, welche die Verschweißung exakt innerhalb des vorgewärmten linienförmigen Bereichs durchführen. Da die Materialbahnen in diesem linienförmigen Bereich bereits vorgewärmt sind, muss weniger Schwingungsenergie zum Verschweißen in die Materialbahnen 2 eingebracht werden, so dass insgesamt mit einer höheren Vorschubgeschwindigkeit gearbeitet werden kann, ohne die Schweißqualität zu vermindern.

Während die Bearbeitungssonotrode und/oder das Bearbeitungsgegenwerkzeug, die für die Verschweißung verantwortlich sind, eine mit Vorsprüngen konturierte Schweißfläche aufweisen können, ist es für die Vorwärmsonotrode und das Vorwärmgegenwerkzeug eher von Vorteil eine in Umfangsrichtung konstante Kontur zu besitzen, um eine gleichmäßige Vorerwärmung zu erreichen.

Beispielsweise könnte die Vorwärmsonotrode in einem senkrecht zur Materialbahn verlaufenden Schnitt einen glockenförmigen oder wulstartigen Querschnitt aufweisen.

### Bezugszeichenliste

- 1: Ultraschallschweißvorrichtung
- 2: Materialbahnen
- 3: Bearbeitungssonotrode
- 4: Bearbeitungsgegenwerkzeug
- 5, 13: Halterung
- 6, 14: Schlitten
- 7, 8, 11, 12: Antrieb
- 9: Vorwärmsonotrode
- 10: Vorwärmgegenwerkzeug

## Patentansprüche

1. Vorrichtung zum Ultraschallverschweißen von mindestens zwei Materialbahnen mit einer mit einer Ultraschallschwingung anregbaren Bearbeitungssonotrode, einem Bearbeitungsgegenwerkzeug und einer Materialbahnführung, die derart ausgelegt ist, dass die Materialbahn zwischen der Bearbeitungssonotrode und dem Bearbeitungsgegenwerkzeug hindurchgeführt werden kann, bei der eine Einrichtung zum Erwärmen zumindest einer Materialbahn vor dem Verschweißen vorgesehen ist, wobei die Einrichtung zum Vorwärmen zumindest einer Materialbahn eine mit einer Ultraschallschwingung anregbare Vorwärmsonotrode aufweist, **dadurch gekennzeichnet, dass** die Bearbeitungssonotrode eine Schweißfläche mit einer Schweißflächenbreite a und die Vorwärmsonotrode eine Schweißfläche mit einer Schweißflächenbreite b hat, wobei b größer als a ist, wobei b vorzugsweise um mehr als 50% größer und am besten b in etwa doppelt so groß wie a ist.

2. Vorrichtung nach Anspruch 1, **dadurch gekennzeichnet, dass** ein Vorwärmgegenwerkzeug vorgesehen ist, welches der Vorwärmsonotrode zugeordnet ist, wobei die Materialbahn derart ausgelegt ist, dass zumindest eine Materialbahn, vorzugsweise beide Materialbahnen zwischen der Vorwärmsonotrode und dem Vorwärmgegenwerkzeug hindurchgeführt werden kann.

3. Vorrichtung nach Anspruch 1, **dadurch gekennzeichnet, dass** das Bearbeitungsgegenwerkzeug auch der Vorwärmsonotrode zugeordnet ist und die Materialbahnführung derart ausgelegt ist, dass die Materialbahn zunächst zur Vorwärmung zwischen Vorwärmsonotrode und Bearbeitungsgegenwerkzeug und dann zur Verschweißung zwischen Bearbeitungssonotrode und Bearbeitungsgegenwerkzeug hindurchgeführt werden kann.

4. Vorrichtung nach einem der Ansprüche 1 bis 3, **dadurch gekennzeichnet, dass** zumindest die Bearbeitungssonotrode und vorzugsweise auch die Vorwärmsonotrode als Rotativsonotrode mit einer im Wesentlichen zylindermantelförmigen Schweißfläche ausgebildet ist.

5. Vorrichtung nach Anspruch 4, **dadurch gekennzeichnet, dass** zumindest das Bearbeitungsgegenwerkzeug und vorzugsweise auch das Vorwärmgegenwerkzeug rotierbar ist und eine im Wesentlichen zylindermantelförmige Schweißfläche aufweist.

6. Vorrichtung nach einem der Ansprüche 1 bis 5, **dadurch gekennzeichnet, dass** das Bearbeitungsgegenwerkzeug als mit einer Ultraschallschwingung anregbare weitere Bearbeitungssonotrode ausgebildet ist, wobei vorzugsweise die Bearbeitungssonotrode und die weitere Bearbeitungssonotrode unterschiedliche Eigenfrequenzen aufweisen.

7. Vorrichtung nach Anspruch 5 oder 6, **dadurch gekennzeichnet, dass** eine Einrichtung zum Rotieren der Vorwärmsonotrode und zum Rotieren der Bearbeitungssonotrode vorgesehen ist, wobei die Einrichtung derart ausgelegt ist, dass die Umfangsgeschwindigkeit der Bearbeitungssonotrode größer als die Umfangsgeschwindigkeit der Vorwärmsonotrode ist.

## Claims

1. Apparatus for ultrasonic welding of at least two material webs comprising a processing sonotrode which can be excited with an ultrasonic vibration, a processing counterpart tool and a material web guide which is so designed that the material web can be passed through between the processing sonotrode and the processing counterpart tool, in which there is provided a device for heating at least one material web prior to the welding operation, wherein the device for preheating at least one material web has a preheating sonotrode which can be excited with an ultrasonic vibration, **characterized in that** the processing sonotrode has a welding surface with a welding surface width a and the preheating sonotrode has a welding surface with a welding surface width b, wherein b is greater than a, wherein b is preferably greater by more than 50% and at best b is approximately twice as great as a.

2. Apparatus as set forth in claim 1 **characterised in that** there is provided a preheating counterpart tool which is associated with the preheating sonotrode, wherein the material web is so adapted that at least one material web, preferably both material webs, can be passed through between the preheating sonotrode and the preheating counterpart tool.

3. Apparatus as set forth in claim 1 **characterised in that** the processing counterpart tool is also associated with the preheating sonotrode and the material web guide means is so adapted that the material web can firstly be passed through between the preheating sonotrode and the processing counterpart tool for preheating and then between the processing sonotrode and the processing counterpart tool for welding.

4. Apparatus as set forth in one of claims 1 through 3 **characterised in that** at least the processing sonotrode and preferably also the preheating sonotrode is in the form of a rotational sonotrode having a welding surface which is substantially in the form of a cylindrical surface.

5. Apparatus as set forth in claim 4 **characterised in that** at least the processing counterpart tool and preferably also the preheating counterpart tool is rotatable and has a welding surface which is substantially in the form of a cylindrical surface.

6. Apparatus as set forth in one of claims 1 through 5 **characterised in that** the processing counterpart tool is in the form of a further processing sonotrode which can be excited with an ultrasonic vibration, wherein preferably the processing sonotrode and the further processing sonotrode have different natural frequencies.

7. Apparatus as set forth in claim 5 or claim 6 **characterised in that** there is provided a device for rotating the preheating sonotrode and for rotating the processing sonotrode, wherein the device is so adapted that the peripheral speed of the processing sonotrode is greater than the peripheral speed of the preheating sonotrode.

## Revendications

1. Dispositif pour souder par ultrasons au moins deux lés de matériau, comprenant une sonotrode de traitement adaptée pour pouvoir être excitée par une onde d'ultrasons, un contre-outil de traitement et un guidage de lés qui est configuré de façon que le lé de matériau puisse être passé entre la sonotrode de traitement et le contre-outil de traitement, dans lequel un dispositif pour chauffer au moins un lé de matériau avant le soudage est prévu, le dispositif pour préchauffer au moins un lé de matériau comprenant une sonotrode de préchauffage adaptée pour être excitée à l'aide d'une oscillation d'ultrasons, **caractérisé en ce que** la sonotrode de traitement comprend une surface de soudage présentant une largeur de surface de soudage a et que la sonotrode de préchauffage comprend une surface de soudage présentant une largeur de soudage b, b étant supérieur à a, b étant de préférence de plus que 50 % plus grand et, le mieux, b étant approximativement le double de a.

2. Dispositif selon la revendication 1, **caractérisé en ce qu'**il est prévu un contre-outil de préchauffage qui est associé à la sonotrode de préchauffage, le lé de matériau étant configuré de façon qu'au moins un lé, de préférence les deux lés de matériau, puisse être passé entre la sonotrode de préchauffage et le contre-outil de préchauffage.

3. Dispositif selon la revendication 1, **caractérisé en ce que** le contre-outil de traitement est également associé à la sonotrode de préchauffage et **en ce que** le guidage de lés de matériau est configuré de façon que le lé de matériau puisse d'abord être passé, pour le préchauffer, entre la sonotrode de préchauffage et le contre-outil de traitement et ensuite, pour le soudage, entre la sonotrode de traitement et le contre-outil de traitement.

4. Dispositif selon l'une des revendications 1 à 3, **caractérisé en ce qu'**au moins la sonotrode de traitement et, de préférence, aussi la sonotrode de préchauffage, est configuré comme sonotrode rotative ayant une surface de soudage ayant, sensiblement, la forme d'une enveloppe de cylindre.

5. Dispositif selon la revendication 4, **caractérisé en ce qu'**au moins le contre-outil de traitement et, de préférence, aussi le contre-outil de préchauffage, est rotatif et présente une surface de soudage ayant, sensiblement, la forme d'une enveloppe de cylindre.

6. Dispositif selon l'une des revendications 1 à 5, **caractérisé en ce que** le contre-outil de traitement est configuré comme une sonotrode de traitement supplémentaire susceptible d'être excitée par une oscillation d'ultrasons, la sonotrode de traitement et la sonotrode de traitement supplémentaire présentant des fréquences propres différentes.

7. Dispositif selon la revendication 5 ou 6, **caractérisé en ce qu'**il est prévu un agencement pour mettre en rotation la sonotrode de préchauffage et pour mettre en rotation la sonotrode de traitement, l'agencement étant configuré de façon que la vitesse circonférentielle de la sonotrode de traitement soit supérieure à la vitesse circonférentielle de la sonotrode de préchauffage.
